# EUROPÄISCHE PATENTSCHRIFT

(11) **EP 1 558 474 B1**
(45) Veröffentlichungstag und Bekanntmachung des Hinweises auf die Patenterteilung: **22.02.2006**
(21) Anmeldenummer: 04728533.3
(22) Anmeldetag: 21.04.2004
(51) Int. Cl.: B60R 25/02

(54) **VORRICHTUNG ZUM SPERREN DER LENKSPINDEL EINES KRAFTFAHRZEUGS**
BLOCKING DEVICE FOR A MOTOR VEHICLE STEERING SHAFT
DISPOSITIF POUR VERROUILLER LA COLONNE DE DIRECTION D'UN VEHICULE A MOTEUR

(30) Priorität: 06.05.2003 DE 10320138
(43) Veröffentlichungstag der Anmeldung: 03.08.2005
(73) Patentinhaber: Huf Hülsbeck & Fürst GmbH & Co. KG, 42551 Velbert (DE)
(72) Erfinder: LIMBURG, Hans-Joachim, 85247 Schwabhausen (DE); ZILLMANN, Horst, 81243 München (DE)
(74) Vertreter: Oedekoven, Wolf Dieter
(86) Internationale Anmeldenummer: PCT/EP2004/004220
(87) Internationale Veröffentlichungsnummer: WO 2004/098961

(56) Entgegenhaltungen:
- WO-A-03/080407
- DE-C- 4 436 326
- DE-C- 10 109 609
- US-A- 2 874 562

## Beschreibung

Die Erfindung bezieht sich auf eine Vorrichtung zum Sperren der Lenkspindel eines Kraftfahrzeugs gegen Drehen mittels eines mit Sperrausnehmungen der Lenkspindel zusammenwirkenden Sperrbolzens, welcher mit Hilfe eines hin-und herdrehbaren Steuergliedes radial zur Drehachse des Steuergliedes zwischen einer Sperrstellung und einer Freigabestellung hin- und herschiebbar ist und mit einem seitlich abstehenden Stift in eine Spiralnut des Steuergliedes eingreift, die sich auf der dem Sperrbolzen benachbarten Stirnseite des Steuerglieds um dessen Drehachse windet.

Eine derartige Vorrichtung zur Verriegelung der Lenkspindel eines Kraftfahrzeugs, so daß sie nicht mehr gedreht werden kann, ist bekannt. Dabei ist der Sperrbolzen zweiteilig ausgebildet und mit einer Schraubendruckfeder versehen, gegen deren Wirkung der mit den Sperrausnehmungen der Lenkspindel zusammenwirkende Sperrbolzenteil und der mit dem Steuerglied zusammenwirkende Sperrbolzenteil zusammengeschoben werden können, wenn das Steuerglied in die der Sperrstellung des Sperrbolzens entsprechende Stellung gedreht wird, der mit der Lenkspindel zusammenwirkende Sperrbolzenteil aber in keine Sperrausnehmung der Lenkspindel eintreten kann, weil die Lenkspindel sich nicht in einer solchen Drehstellung befindet, in welcher eine ihrer Sperrausnehmungen auf diesen Sperrbolzenteil ausgerichtet ist. Der am anderen Sperrbolzenteil vorgesehene, in die Spiralnut des Steuergliedes eingreifende Stift stellt einen unbeweglichen seitlichen Vorsprung dieses Sperrbolzenteils dar. Das Steuerglied ist als kreisrunde Scheibe ausgebildet, welche mit Hilfe eines Schließzylinders hin- und hergedreht werden kann. Die zweiteilige Sperrbolzenausbildung mit Schraubendruckfeder ist verhältnismäßig aufwendig und störanfällig (DE-A-506 781).

Bei einer ähnlichen bekannten Vorrichtung zum Sperren der Lenkspindel eines Kraftfahrzeugs gegen Drehen ist ein einteiliger Sperrbolzen vorgesehen, dessen seitlich abstehender Stift mit dem Sperrbolzen fest verbunden ist und sich durch einen spiralförmigen Schlitz einer kreisrunden Steuerscheibe hindurch erstreckt, welche mittels eines Schließzylinders hin- und hergedreht werden kann. Die Steuerscheibe kann nur dann in die der Sperrstellung des Sperrbolzens entsprechende Stellung gedreht werden, wenn eine Sperrausnehmung der Lenkspindel auf den Sperrbolzen ausgerichtet ist und der Sperrbolzen in die Sperrausnehmung eintreten kann, um seine Sperrstellung einzunehmen (US-A-1 786 186).

Der Erfindung liegt die Aufgabe zugrunde, eine Vorrichtung der eingangs angegebenen Art zu schaffen, welche sich durch einen in jeder Hinsicht einfachen sowie kostengünstigen Sperrbolzen geringsmöglicher Störanfälligkeit auszeichnet, wobei das Steuerglied dennoch stets in die der Sperrstellung des Sperrbolzens entsprechende Stellung gedreht werden kann, unabhängig von der jeweiligen Drehstellung der Lenkspindel.

Diese Aufgabe ist bei einer gattungsgemäßen Vorrichtung erfindungsgemäß durch die im kennzeichnenden Teil des Patentanspruchs 1 aufgeführten Merkmale gelöst Vorteilhafte Ausgestaltungen der Vorrichtung nach der Erfindung sind in den restlichen Patentansprüchen angegeben.

Nachstehend ist eine bevorzugte Ausführungsform der erfindungsgemäßen Vorrichtung zum Sperren der Lenkspindel eines Kraftfahrzeugs gegen Drehen anhand von Zeichnungen beispielsweise beschrieben. Darin zeigt:
Fig. 1 den Längsschnitt entlang der Linie I-I in Fig. 2, wobei der Sperrbolzen sich in seiner Sperrstellung befindet;
Fig. 2 die Ansicht in Richtung des Pfeils II in Fig. 1 ohne Gehäuse, Gehäusedeckel sowie Leiterplatte und ohne Lenkspindel;
Fig. 3 eine der Ansicht von Fig. 2 entsprechende perspektivische Darstellung, wobei der Sperrbolzen längsgeschnitten ist;
Fig. 4 den Längsschnitt entlang der Linie IV-IV in Fig. 5, wobei der Sperrbolzen sich in seiner Freigabestellung befindet;
Fig. 5 die Ansicht in Richtung des Pfeils V in Fig. 4 ohne Gehäuse, Gehäusedeckel sowie Leiterplatte und ohne Lenkspindel;
Fig. 6 eine der Ansicht von Fig. 5 entsprechende perspektivische Darstellung, wobei der Sperrbolzen längsgeschnitten ist;

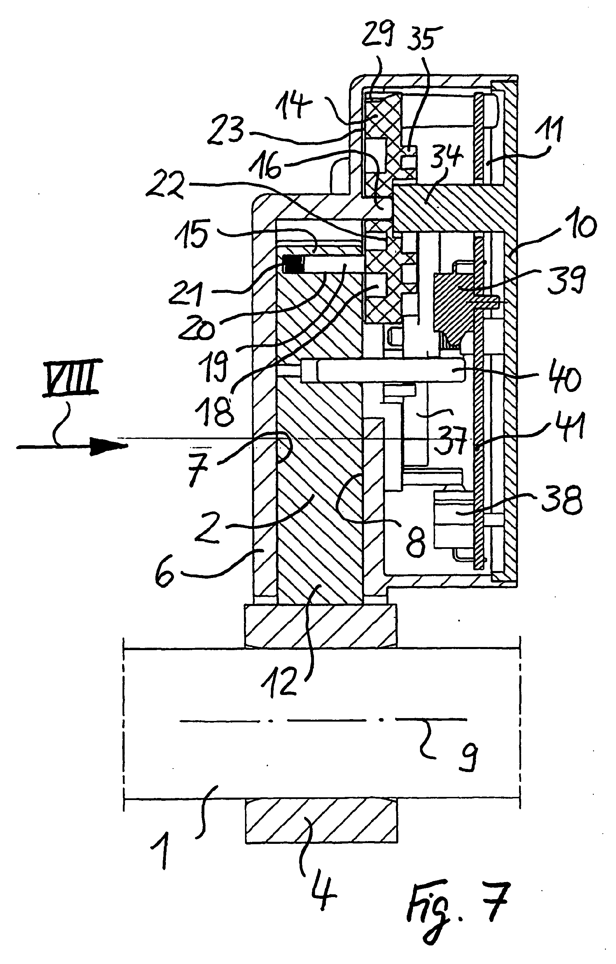

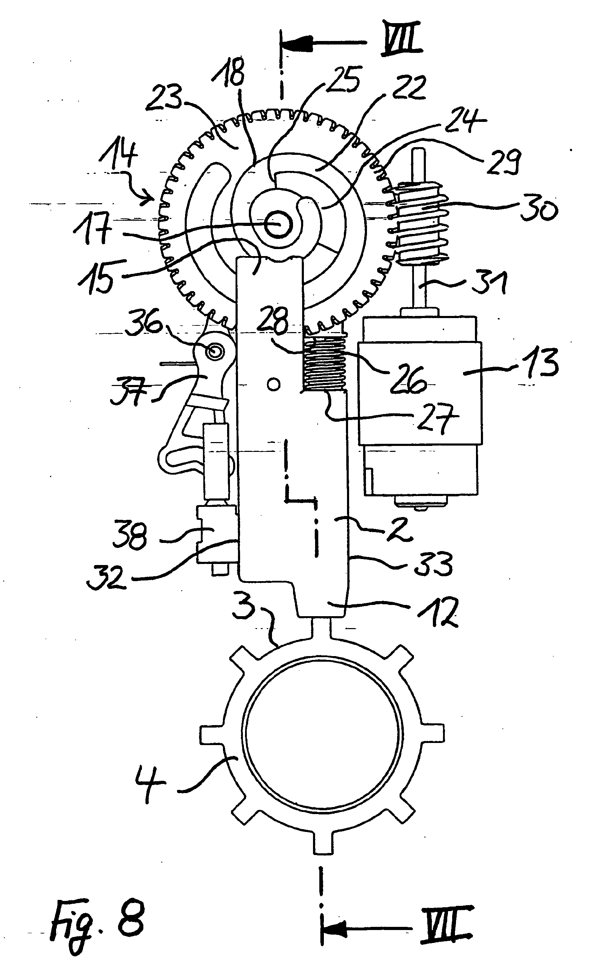

Fig. 7 den Längsschnitt entlang der Linie VII VII in Fig. 8, wobei der Sperrbolzen sich in einer Vorsperrstellung befindet;
Fig. 8 die Ansicht in Richtung des Pfeils VIII in Fig. 7 ohne Gehäuse, Gehäusedeckel sowie Leiterplatte und ohne Lenkspindel;
Fig. 9 eine der Ansicht von Fig. 8 entsprechende perspektivische Darstellung, wobei der Sperrbolzen längsgeschnitten ist;

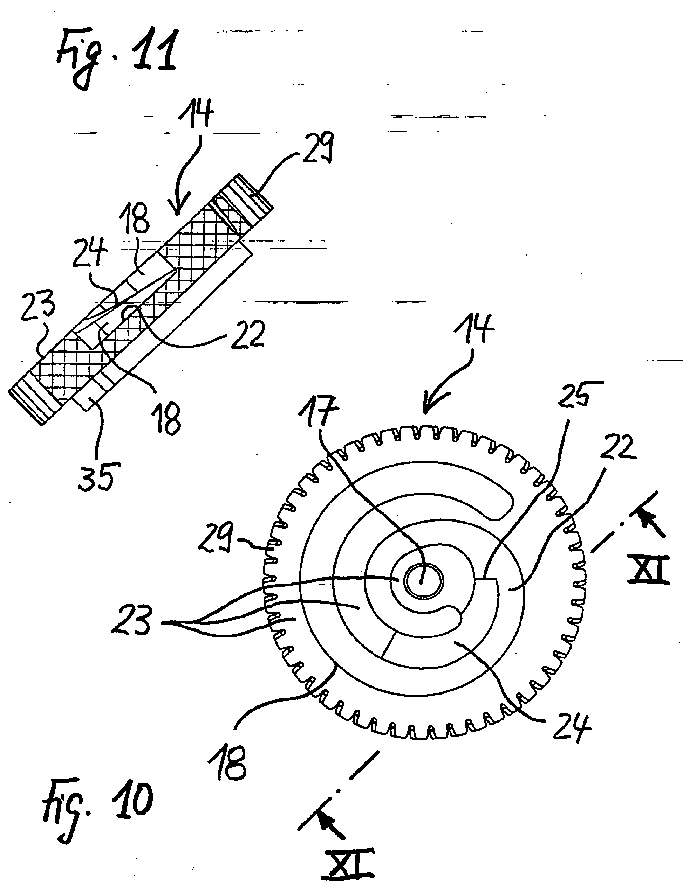

Fig. 10 eine Draufsicht auf die mit einer Spiralnut versehene Stirnseite des Steuergliedes;
Fig. 11 den Schnitt entlang der Linie XI-XI in Fig. 10.

Die dargestellte Vorrichtung zum Sperren der Lenkspindel 1 eines Kraftfahrzeugs gegen Drehen weist einen einteiligen Sperrbolzen 2 auf, welcher mit nutenförmigen Sperrausnehmungen 3 einer auf der Lenkspindel 1 befestigten Sperrhülse 4 zusammenwirkt. Die Lenkspindel 1 und die Sperrhülse 4 sind von einem nicht wiedergegebenen Mantelrohr mit einer Durchgängsöffnung für den Sperrbotzen 2 umschlossen.

Der Sperrbolzen 2 weist einen rechteckigen Querschnitt auf und ist in einem Kanal 5 entsprechenden Querschnitts eines Gehäuses 6 axial verschieblich gelagert. Die beiden breiteren Seitenflächen 7, 8 des Kanals 5 erstrecken sich jeweils in einer zur gemeinsamen Längsachse 9 der Lenkspindel 1 und des dazu koaxialen Mantelrohres senkrechten Ebene. Das Gehäuse 6 ist auf der dem Kanal 5 fernen Seite mit einer durch einen Deckel 10 verschlossenen Montageöffnung 11 versehen und am Mantelrohr befestigt.

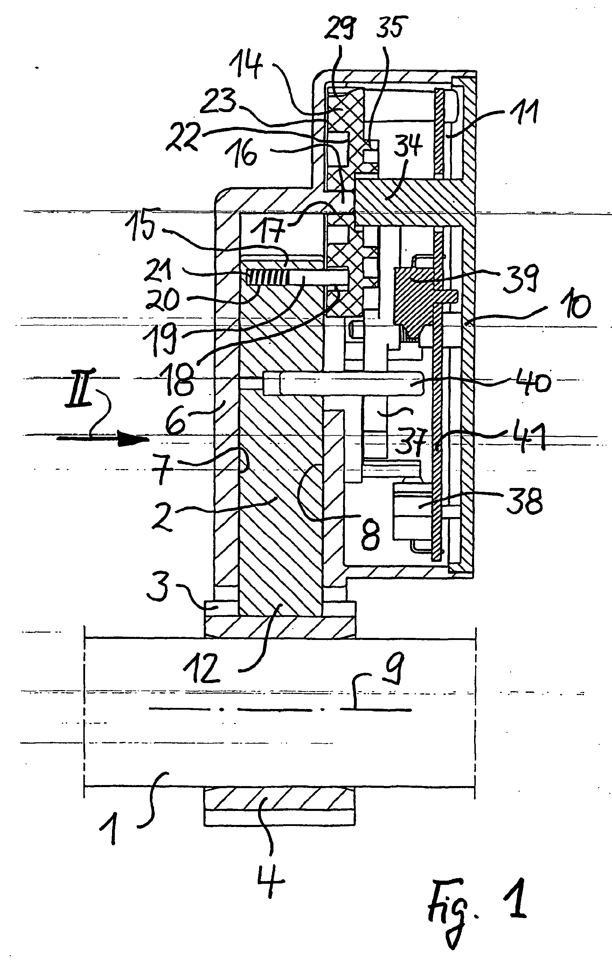

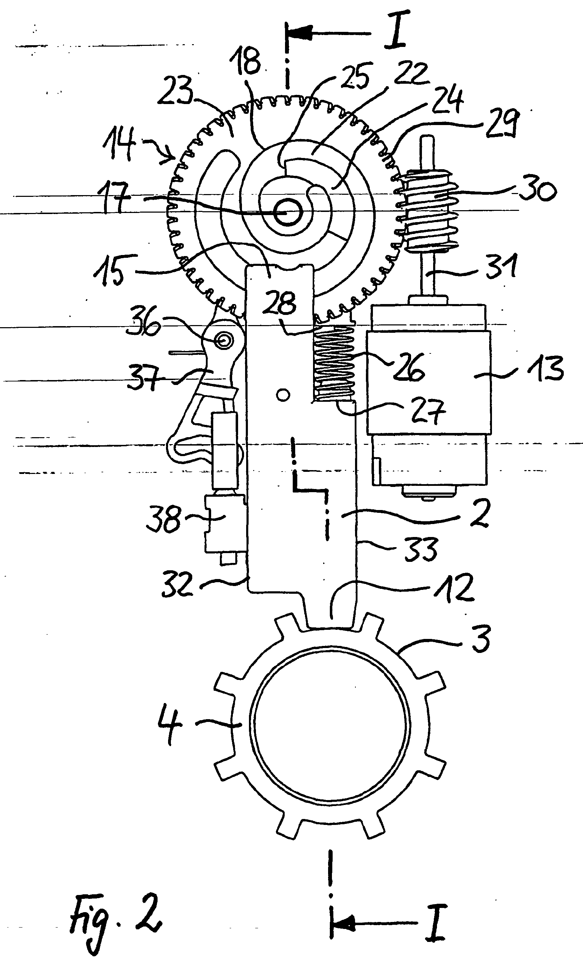

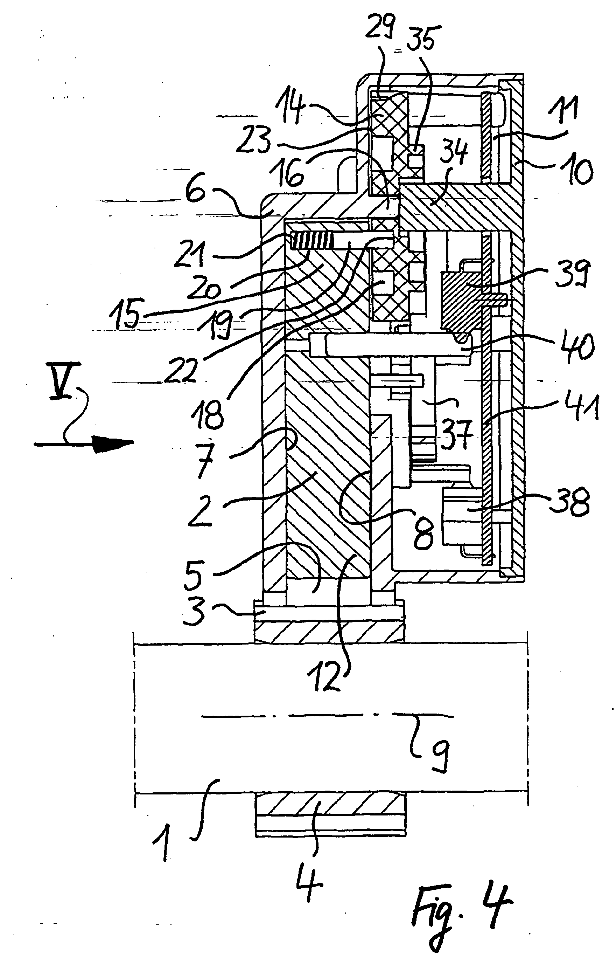

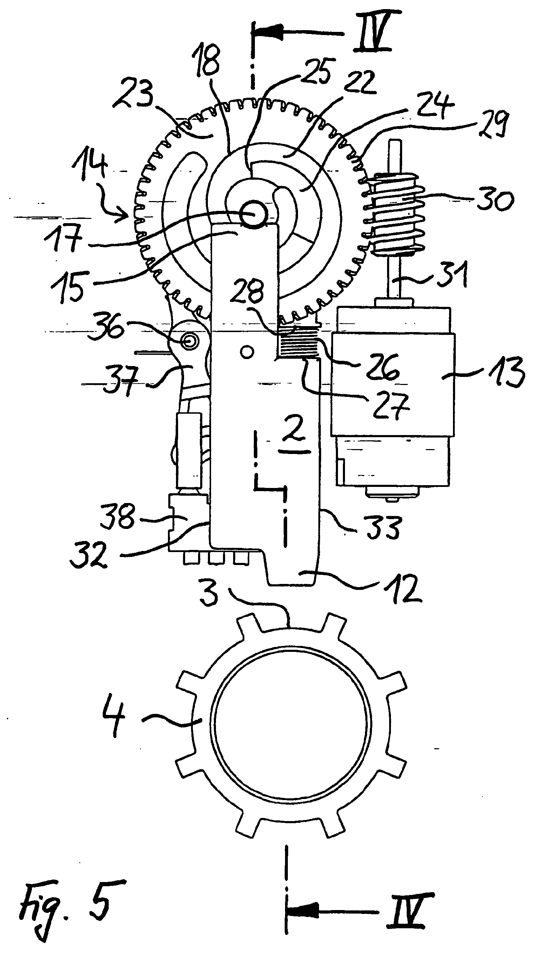

Der Sperrbolzen 2 ist zwischen der aus Fig. 1, 2, 3 ersichtlichen Sperrstellung, in welcher er mit seinem der Lenkspindel 1 zugewandten Ende 12 in eine Sperrausnehmung 3 der Sperrhülse 4 eingreift, so daß die Lenkspindel 1 nicht mehr gedreht werden kann, und der aus Fig. 4, 5, 6 ersichtlichen Freigabestellung hin- und herbewegbar, in welcher der Sperrbolzen 2 mit dem Ende 12 in keine Sperrausnehmung 3 der Sperrhülse 4 eingreift und die Lenkspindel 1 freigibt, so daß sie gedreht werden kann.

Zur Axialverschiebung des Sperrbolzens 2 in die Freigabestellung und in der entgegensetzten Richtung in die Sperrstellung dient ein mittels eines Elektromotors 13 mit umkehrbarer Drehrichtung hin- und herdrehbares Steuerglied 14. Das Steuerglied 14 ist auf der dem Gehäusedeckel 10 zugewandten Seite des Sperrbolzens 2 neben dem der Lenkspindel 1 fernen Ende 15 des Sperrbolzens 2 angeordnet und im Gehäuse 6 auf einem zylindrischen Vorsprung 16 des Gehäuses 6 drehbar gelagert, welcher in eine mittige Lagerbohrung 17 des Steuergliedes 14 eingreift und sich senkrecht zu den beiden breiteren Seitenflächen 7, 8 des den Sperrbolzen 2 führenden Kanals 5 des Gehäuses 6 erstreckt.

Auf der dem Sperrbolzen 2 benachbarten Stirnseite ist das Steuerglied 14 mit einer Spiralnut 18 versehen, welche sich um die Lagerbohrung 17 des Steuerglieds 14 herumwindet und in welche ein vom Sperrbolzen 2 seitlich abstehender Stift 19 eingreift, so daß der Sperrbolzen 2 beim Drehen des Steuergliedes 14 in der einen oder in der anderen Richtung radial zu der vom Gehäusevorsprung 16 definierten Drehachse des Steuergliedes 14 in der einen bzw. in der anderen Richtung axial verschoben wird.

Der zylindrische Stift 19 ist in einer im lenkspindelfernen Ende 15 des Sperrbolzens 2 vorgesehenen zylindrischen Bohrung 20 axial verschieblich gelagert und durch eine in der Bohrung 20 angeordnete Schraubendruckfeder 21 in Richtung auf das Steuerglied 14 belastet. Das Steuerglied 14 weist eine mit dem Stift 19 so, wie weiter unten beschrieben, zusammenwirkende, vom Boden 22 der Spiralnut 18 zu der dem Sperrbolzen 2 zugewandten ebenen Oberfläche 23 des Steuergliedes 14 ansteigende Schrägfläche 24 auf, welche sich an der Spiralnut 18 entlang erstreckt und an einer weiter unten erläuterten Stelle 25 des Bodens 22 der Spiralnut 18 beginnt. Der Sperrbolzen 2 ist durch eine Schraubendruckfeder 26 in Richtung auf die Lenkspindel 1 belastet, welche sich einerseits an einer Schulter 27 des Sperrbolzens 2 und andererseits an einer Schulter 28 des Gehäuses 6 abstützt

Das Steuerglied 14 ist als kreisrunde Scheibe mit einer Umfangsverzahnung 29 ausgebildet, in welche eine Antriebsschnecke 30 eingreift, die auf der Ausgangswelle 31 des Elektromotors 13 befestigt ist Der Elektromotor 13 ist im Gehäuse 6 neben dem Sperrbolzen 2 angeordnet, so daß seine Ausgangswelle 31 sich parallel zu den beiden schmaleren Seitenflächen 32, 33 des Sperrbolzens 2 erstreckt

Das Steuerglied 14 ist auf dem zylindrischen Vorsprung 16 des Gehäuses 6 durch einen zylindrischen Vorsprung 34 größeren Durchmessers des Gehäusedeckels 10 axial fixiert und auf der dem Sperrbolzen 2 abgewandten Stirnseite mit einer vorstehenden Spiralrippe 35 versehen, welche sich um die Lagerbohrung 17 des Steuergliedes 14 herumwindet und mit welcher ein im Gehäuse 6 um eine zum Gehäusevorsprung 16 parallele Achse 36 verschwenkbarer, federbelasteter zweiarmiger Schwenkhebel 37 zusammenwirkt, um einen elektrischen Schalter 38 sowohl in der der Sperrstellung des Sperrbolzens 2 entsprechenden Drehstellung des Steuergliedes 14 als auch in der der Freigabestellung des Sperrbolzens 2 entsprechenden Drehstellung des Steuergliedes 14 zu betätigen. Ein weiterer elektrischer Schalter 39 wird von einem stiftförmigen seitlichen Vorsprung 40 des Sperrbolzens 2 betätigt, wenn der Sperrbolzen 2 seine Freigabestellung einnimmt. Die beiden elektrischen Schalter 38, 39 sind an einer im Gehäuse 6 befestigten, zum Gehäusedeckel 10 parallelen Leiterplatte 41 angeordnet.

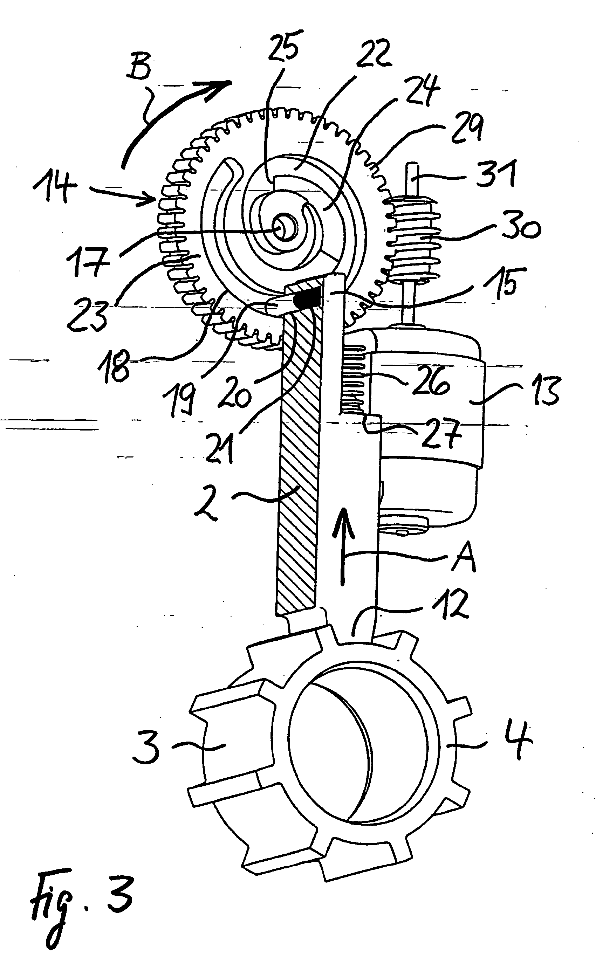

Die Funktionsweise der geschilderten Vorrichtung zum Sperren der Lenkspindel 1 gegen Drehen ergibt sich besonders deutlich aus Fig. 3, 6, 9.

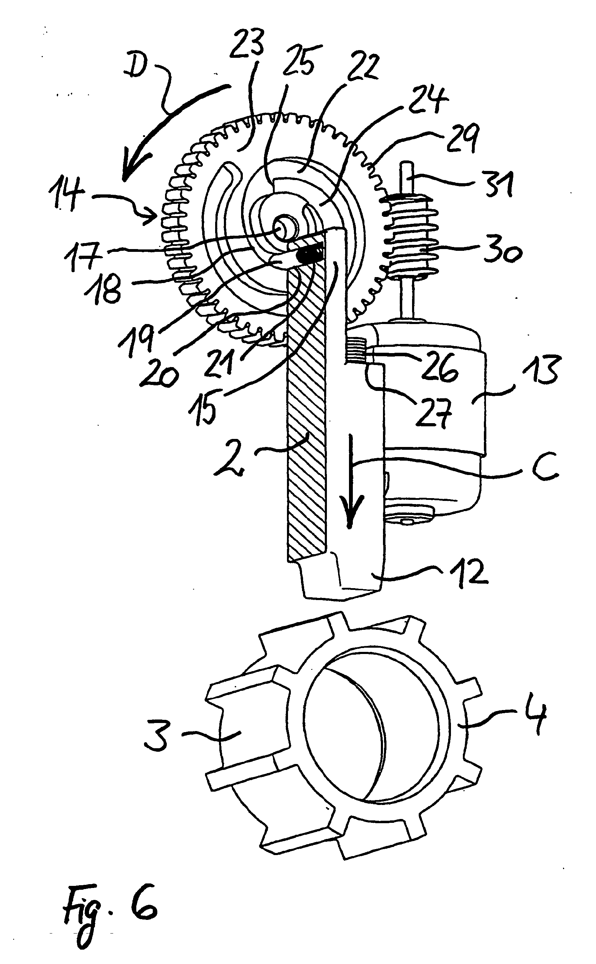

Um den einteiligen Sperrbolzen 2 axial aus der Sperrstellung gemäß Fig. 3 in Richtung des Pfeils A in die Freigabestellung nach Fig. 6 zu verschieben, wird der Elektromotor 13 eingeschaltet, so daß seine Ausgangswelle 31 über die Antriebsschnecke 30 das Steuerglied 14 in Richtung des Pfeils B dreht und der Stift 19 des Sperrbolzens 2 sich in der Spiralnut 18 des Steuergliedes 14 immer näher zur Drehachse (Lagerbohrung 17) des Steuergliedes 14 bewegt.

Um den einteiligen Sperrbolzen 2 axial aus der Freigabestellung gemäß Fig. 6 in Richtung des Pfeils C in die Sperrstellung nach Fig. 3 zu verschieben, wird der Elektromotor 13 eingeschaltet, so daß seine Ausgangswelle 31 über die Antriebsschnecke 30 das Steuerglied 14 in Richtung des Pfeils D dreht und der Stift 19 des Sperrbolzens 2 sich in der Spiralnut 18 des Steuergliedes 14 immer weiter von der Drehachse (Lagerbohrung 17) des Steuergliedes 14 weg bewegt.

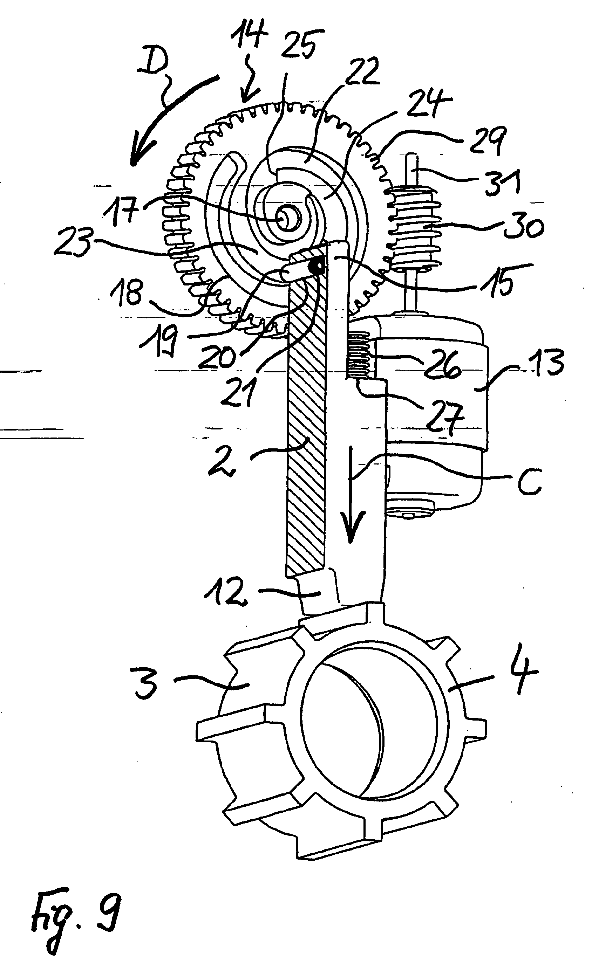

Wenn beim Drehen des Steuergliedes 14 in Richtung des Pfeils D dem einteiligen Sperrbolzen 2 bzw. dem lenkspindelseitigen Ende 12 desselben keine Sperrausnehmung 3 der Lenkspindel 1 bzw. der Sperrhülse 4 derselben gegenüberliegt, dann kann der Sperrbolzen 2 bzw. das Ende 12 desselben nicht in eine Sperrausnehmung 3 eintreten und der Sperrbolzen 2 nicht in seine Sperrstellung laufen, sondern nur in die Vorsperrstellung nach Fig. 9. Sobald der Sperrbolzen 2 bei seiner Axialverschiebung in Richtung des Pfeils C diese Vorsperrstellung erreicht, liegt der Stift 19 des Sperrbolzens 2 mit seinem freien Ende an der Stelle 25 des Bodens 22 der Spiralnut 18 des Steuergliedes 14 an. Beim weiteren Drehen des Steuerglieds 14 in Richtung des Pfeils D gleitet der Stift 19 mit seinem freien Ende an der Schrägfläche 24 des Steuergliedes 14 entlang auf die dem Sperrbolzen 2 zugewandte ebene Oberfläche 23 des Steuergliedes 14, um entgegen der Wirkung der Schraubendruckfeder 21 in die Bohrung 20 des Sperrbolzens 2 zurückzulaufen und die Spiralnut 18 des Steuergliedes 14 zu verlassen, so daß das Steuerglied 14 in Richtung des Pfeils D bis in die der Sperrstellung des Sperrbolzens 2 entsprechende Stellung weitergedreht werden kann, wie in Fig. 9 dargestellt ist.

Aus der Vorsperrstellung nach Fig. 9 gelangt der einteilige Sperrbolzen 2 unter der Wirkung seiner Schraubendruckfeder 26 ohne weiteres in die Sperrstellung nach Fig. 3, wenn die Lenkspindel 1 mit der Sperrhülse 4 aus der Stellung gemäß Fig. 9 in die Stellung gemäß Fig. 3 gedreht wird, in welcher eine Sperrausnehmung 3 der Sperrhülse 4 auf das benachbarte Ende 12 des Sperrbolzens 2 ausgerichtet ist. Der Stift 19 des Sperrbolzens 2 gleitet dabei mit seinem freien Ende auf der ebenen Oberfläche 23 des Steuergliedes 14, um schließlich durch seine Schraubendruckfeder 21 wieder aus der Bohrung 20 des Sperrbolzens 2 in Eingriff mit der Spiralnut 18 des Steuergliedes 14 vorgeschoben zu werden.

## Patentansprüche

1. Vorrichtung zum Sperren der Lenkspindel (1) eines Kraftfahrzeugs gegen Drehen mittels eines mit Sperrausnehmungen (3) der Lenkspindel (1) zusammenwirkenden Sperrbolzens (2), welcher mit Hilfe eines hin- und herdrehbaren Steuergliedes (14) radial zur Drehachse des Steuergliedes (14) zwischen einer Sperrstellung und einer Freigabestellung hin- und herschiebbar ist und mit einem seitlich abstehenden Stift (19) in eine Spiralnut (18) des Steuergliedes (14) eingreift, die sich auf der dem Sperrbolzen (2) benachbarten Stirnseite des Steuergliedes (14) um dessen Drehachse windet, **gekennzeichnet durch** einen einteiligen Sperrbolzen (2), dessen Stift (19) im Sperrbolzen (2) verschieblich gelagert und in Richtung auf das Steuerglied (14) federbelastet ist, welches eine mit dem Stift (19) zusammenwirkende, vom Boden (22) der Spiralnut (18) zu der dem Sperrbolzen (2) zugewandten ebeneren Oberfläche (23) des Steuergliedes (14) ansteigende Schrägfläche (24) aufweist, so daß der Stift (19) des Sperrbolzens (2) die Spiralnut (18) des Steuergliedes (14) entgegen der Wirkung seiner Federbelastung (21) verlassen und das Steuerglied (14) auch dann bis in die der Sperrstellung des Sperrbolzens (2) entsprechende Stellung gedreht werden kann, wenn dem Sperrbolzen (2) keine Sperrausnehmung (3) der Lenkspindel (1) gegenüberliegt und er nicht in seine Sperrstellung laufen kann.

2. Vorrichtung nach Anspruch 1, **dadurch gekennzeichnet, daß** die Schrägfläche (24) des Steuergliedes (14) sich an dessen Spiralnut (18) entlang erstreckt und an derjenigen Stelle (25) des Bodens (22) der Spiralnut (18) beginnt, an welcher der Stift (19) des Sperrbolzens (2) beim Drehen des Steuergliedes (14) zur Verschiebung des Sperrbolzens (2) aus der Freigabestellung in die Sperrstellung anliegt, wenn dem Sperrbolzen (2) keine Sperrausnehmung (3) der Lenkspindel (1) gegenüberliegt und er nicht in seine Sperrstellung laufen kann.

3. Vorrichtung nach Anspruch 1 oder 2, **dadurch gekennzeichnet, daß** der Sperrbolzen (2) in Richtung auf die Lenkspindel (1) federbelastet ist.

4. Vorrichtung nach Anspruch 1, 2 oder 3, **dadurch gekennzeichnet, daß** das Steuerglied (14) als kreisrunde Scheibe mit einer Umfangsverzahnung (29) für den Eingriff eines Antriebsritzels oder einer Antriebsschnecke (30) ausgebildet ist.

5. Vorrichtung nach Anspruch 4, **dadurch gekennzeichnet, daß** ein Elektromotor (13) mit umkehrbarer Drehrichtung mit dem Antriebsritzel oder der Antriebsschnecke (30) zusammenwirkt.

6. Vorrichtung nach Anspruch 5, **dadurch gekennzeichnet, daß** der Elektromotor (13) koaxial zur Antriebsschnecke (30) und neben dem Sperrbolzen (2) angeordnet ist.

## Claims

1. Device for locking the steering spindle (1) of a motor vehicle against rotation by means of a locking bolt (2), which cooperates with locking recesses (3) of the steering spindle (1), and which, with the aid of a control member (14), which is rotatable to and fro, can be moved radially to and fro relative to the axis of rotation of the control member (14) between a locking position and a release position and, with a laterally-protruding pin (19), engages a spiral groove (18) of the control member (14), which groove winds around the axis of rotation of the control member (14) on the end face of the control member (14) adjacent to the locking bolt (2),
**characterised by**
a one-piece locking bolt (2), the pin (19) of which is supported in a movable manner in the locking bolt (2) and spring-loaded towards the control member (14), which has an inclined surface (24) cooperating with the pin (19) and rising from the bottom (22) of the spiral groove (18) of the control member (14) to the flat surface (23) thereof facing towards the locking bolt (2), so that the pin (19) of the locking bolt (2) can leave the spiral groove (18) of the control member (14) against the action of its spring loading (21), and the control member (14) can be rotated into the position corresponding to the locking position of the locking bolt (2), even if no locking recess (3) of the steering spindle (1) is located in front of the locking bolt (2), and the locking bolt cannot move into its locking position.

2. Device according to claim 1,
**characterised in that**
the inclined surface (24) of the control member (14) extends along the spiral groove (18) of the control member (14) and begins at the point (25) on the bottom (22) of the spiral groove (18), at which the pin (19) of the locking bolt (2) rests upon rotation of the control member (14) in order to move the locking bolt (2) out of the release position into the locking position when no locking recess (3) of the steering spindle (1) is located in front of the locking bolt (2), and the locking bolt cannot move into its locking position.

3. Device according to claim 1 or 2,
**characterised in that**
the locking bolt (2) is spring-loaded towards the steering spindle (1).

4. Device according to claim 1, 2 or 3,
**characterised in that**
the control member (14) is formed as a circular disk with circumferential teeth (29) for engagement by a drive pinion or a drive worm (30).

5. Device according to claim 4,
**characterised in that**
an electric motor (13) with reversible direction of rotation cooperates with the drive pinion or the drive worm (30).

6. Device according to claim 5,
**characterised in that**
the electric motor (13) is disposed coaxially relative to the drive worm (30) and next to the locking bolt (2).

## Revendications

1. Dispositif pour verrouiller la colonne de direction (1) d'un véhicule à moteur en vue d'empêcher sa rotation, au moyen d'un goujon de verrouillage (2) coopérant avec des ouvertures de verrouillage (3) dans la colonne de direction (1) et mobile en translation en va-et-vient, à l'aide d'un organe de commande (14) qui est mobile en rotation en va-et-vient, dans le sens radial par rapport à l'axe de rotation de l'organe de commande (14) entre une position de verrouillage et une position de déverrouillage et qui se met en prise avec une goupille (19) dépassant latéralement dans une gorge en spirale (18) de l'organe de commande (14) qui s'enroule autour de l'axe de rotation de l'organe de commande (14) sur la face de celui-ci voisine du goujon de verrouillage (2), **caractérisé en ce qu'**il comporte un goujon de verrouillage (2) d'une pièce dont la goupille (19) est supportée de manière coulissante dans le goujon de verrouillage (2) et contrainte par ressort en direction de l'organe de commande (14), lequel possède une surface oblique (24) coopérant avec la goupille (19) et ascendante du fond (22) de la gorge en spirale (18) à la surface plane (23) de l'organe de commande (14) orientée vers le goujon de verrouillage (2), de sorte que la goupille (19) du goujon de verrouillage (2) peut sortir de la gorge en spirale (18) de l'organe de commande (14) contre l'action de sa contrainte par ressort (21) et l'organe de commande (14) peut tourner jusqu'à la position correspondant à la position de verrouillage du goujon de verrouillage (2) même lorsqu'il n'y a pas d'ouverture de verrouillage (3) de la colonne de direction (1) en face du goujon de verrouillage (2) et que celui-ci ne peut pas venir dans sa position de verrouillage.

2. Dispositif selon la revendication 1, **caractérisé en ce que** la surface oblique (24) de l'organe de commande (14) s'étend le long de la gorge en spirale (18) de celui-ci et commence à l'endroit (25) du fond (22) de la gorge en spirale (18) où la goupille (19) du goujon de verrouillage (2) repose lorsque l'organe de commande (14) tourne pour déplacer le goujon de verrouillage (2) de la position de déverrouillage à la position de verrouillage et lorsqu'il n'y a pas d'ouverture de verrouillage (3) de la colonne de direction (1) en face du goujon de verrouillage (2) et que celui-ci ne peut pas venir dans sa position de verrouillage.

3. Dispositif selon la revendication 1 ou 2, **caractérisé en ce que** le goujon de verrouillage (2) est contraint par ressort en direction de la colonne de direction (1) .

4. Dispositif selon la revendication 1, 2 ou 3, **caractérisé en ce que** l'organe de commande (14) est conformé comme un disque circulaire avec une denture de circonférence (29) pour l'engrènement d'un pignon d'entraînement ou d'une vis sans fin d'entraînement (30).

5. Dispositif selon la revendication 4, **caractérisé en ce qu'**un moteur électrique (13) à sens de rotation réversible coopère avec le pignon d'entraînement ou la vis sans fin d'entraînement (30).

6. Dispositif selon la revendication 5, **caractérisé en ce que** le moteur électrique (13) est disposé de façon coaxiale avec la vis sans fin d'entraînement (30) et à côté du goujon de verrouillage (2).
